# NEUE EUROPÄISCHE PATENTSCHRIFT

(11) **EP 3 693 946 B2**
(45) Veröffentlichungstag und Bekanntmachung des Hinweises auf die Entscheidung über den Einspruch: **29.07.2026**
(45) Hinweis auf die Patenterteilung: 09.03.2022
(21) Anmeldenummer: 20151578.0
(22) Anmeldetag: 14.01.2020
(51) Int. Cl.: G08G 5/00, F03D 80/10, H04W 84/04, H04B 7/185, G01S 5/02

(54) **VERFAHREN UND ANLAGE ZUR STEUERUNG VON FLUGHINDERNISBEFEUERUNGEN UND COMPUTERPROGRAMM**
ANTENNA MAST, METHOD AND SYSTEM FOR PROVIDING FLIGHT DATA AND COMPUTER PROGRAM
MÂT D'ANTENNE, PROCÉDÉ ET INSTALLATION DE FOURNITURE DES DONNÉES DE VOL ET PROGRAMME INFORMATIQUE

(30) Priorität: 15.01.2019 DE 102019100910; 25.01.2019 DE 102019101886
(43) Veröffentlichungstag der Anmeldung: 12.08.2020
(60) Teilanmeldung: 22159707.3
(73) Patentinhaber: AlexCo Holding GmbH, 30659 Hannover (DE)
(72) Erfinder: Gerdes, Alexander, 30659 Hannover (DE); Sevim, Alper, 20149 Hamburg OT Harvestehude (DE)
(74) Vertreter: Gramm, Lins & Partner Patent- und Rechtsanwälte PartGmbB

(56) Entgegenhaltungen:
- WO-A1-2006/092137
- WO-A1-2015/065253
- WO-A1-2017/120110
- WO-A1-99/22465
- WO-A2-2006/123227
- DE-A1- 102015 118 028
- US-A- 6 094 169
- US-B1- 6 735 438

## Beschreibung

Die Erfindung betrifft ein Verfahren zur Steuerung von Flughindernisbefeuerungen und ein Computerprogramm zur Durchführung eines solchen Verfahrens.

Allgemein betrifft die Erfindung die Erfassung von Luftfahrzeugen in Niedrigstflughöhen, z.B. tieffliegende Hubschrauber oder Sportflugzeuge. Die Erfassung von Daten solcher Luftfahrzeuge und deren Bereitstellung werden für die Ansteuerung von Signalgebern an Luftfahrthindernissen genutzt z.B. für das rechtzeitige Einschalten nicht dauerbetriebener Befeuerungsanlagen an Windenergieanlagen.

Aus der DE 20 2005 019 193 U1 oder der EP 2 432 693 B1 sind Vorschläge bekannt, eine Steuerung von Hindernisbefeuerungen anhand von Transpondersignalen von Luftfahrzeugen durchzuführen. Da solche Transpondersignale im Regelfall bereits eine Höhen- und Ortsinformation des Luftfahrzeugs enthalten, kann durch Vergleich mit der geografischen Position eines Luftfahrthindernisses auf eine Kollisionsgefahr und dementsprechend auf einen Bedarf, die Hindernisbefeuerung des Luftfahrthindernisses einzuschalten, geschlossen werden. Aus der WO 2017/120 110 A1 ist die Nutzung einer nationalen zellulären Infrastruktur für die Steuerung und Kontrolle von UAVs bekannt. Aus der WO 09/22465 A1 ist eine nicht-terrestrische zelluläre mobile Telekommunikationsstation bekannt. Aus der WO 2006/123 227 A2 ist eine Anordnung, ein System und ein Verfahren zum Kommunizieren mit Luftfahrzeugen durch zelluläre Basisstationstürme bekannt. Aus der US 6,735,438 B1 ist eine Antenne für die Luft-zu-Boden Kommunikation bekannt. Aus der US 6,094,169 ist eine Multilaterations-Autokalibrierung und eine Positionsfehlerkorrektur bekannt. Aus der DE 10 2015 118 028 A1 ist die Überwachung tieffliegender Luftfahrzeuge bekannt.

Das Dokument WO 2006/092137 offenbart ein Verfahren zur Steuerung von Flughindernisbefeuerungen, bei dem in einer Empfangseinrichtung Kennungsdatensätze von Luftfahrzeugen empfangen werden, wobei ein Kennungsdatensatz zumindest eine das jeweilige den Kennungsdatensatz aussendende Luftfahrzeug eindeutig kennzeichnende Information aufweist, in der jeweiligen Empfangseinrichtung einem empfangenen Kennungsdatensatz wenigstens ein in der Empfangseinrichtung gemessener physikalischer Kennwert, insbesondere ein Empfangszeitpunkt und/oder eine Empfangsleistung, des empfangenen Kennungsdatensatzes zugeordnet wird und wobei die Auswerteeinrichtung die dreidimensionale geografische Position des Luftfahrzeugs Systemen zur Steuerung von Flughindernisbefeuerungen bereitstellt und/oder Einschalt und/oder Ausschaltsignale zum Einschalten oder Ausschalten von Flughindernisbefeuerungen aussendet.

Der Erfindung liegt die Aufgabe zugrunde, alternative und/oder verbesserte Möglichkeiten zur Steuerung von Flughindernisbefeuerungen aufzuzeigen.

Ein Antennenmast eines zellulären Mobiltelefonnetzes kann eine oder mehrere Mobilfunkantennen zur Bildung einer Luftschnittstelle des Mobiltelefonnetzes zu in der Umgebung befindlichen Mobiltelefonen aufweisen, wobei an dem Antennenmast wenigstens Empfangseinrichtung zum Empfang von Flugzeug-Transpondersignalen angeordnet ist. Es wurde erkannt, dass zelluläre Mobilfunknetze eine vorteilhafte Infrastruktur für die Überwachung des Luftverkehrs bieten, da sie bereits ein relativ dichtes landesweites Netz von Antennenmasten aufweisen, das lediglich um ein Empfangseinrichtungen zum Empfang von Flugzeug-Transpondersignalen zu erweitern ist, um eine zuverlässige Luftverkehrs-Überwachung insbesondere in Niedrigstflughöhen zu ermöglichen. Da im Bereich eines solchen Antennenmasts bereits die notwendigen Ressourcen wie elektrische Stromversorgung und Anbindung an ein Datennetzwerk vorhanden sind, ist die entsprechende Erweiterung einfach und kostengünstig zu realisieren. Der Antennenmast kann beispielsweise bereits eine Basisstation eines Mobiltelefonnetzes aufweisen.

Gemäß Gemäß einem Beispiel, das nicht Teil der Erfindung ist, weist die Empfangseinrichtung zum Empfangen von Flugzeug-Transpondersignalen eine Empfangsantenne mit zumindest überwiegend horizontal ausgerichteter Empfangscharakteristik auf. Dies ermöglicht eine besonders effiziente und weitreichende Erfassung tieffliegender Luftfahrzeuge. Die Erfassung hochfliegender Luftfahrzeuge ist für die Realisierung dieser Weiterbildung der Erfindung dagegen unwesentlich.

Ein zelluläres Mobiltelefonnetz, z.B. ein landesweites zelluläres Mobiltelefonnetz, kann ausschließlich oder überwiegend Antennenmasten der zuvor erläuterten Art aufweisen. Auch hierdurch können die zuvor erläuterten Vorteile realisiert werden. Als landesweites zelluläres Mobiltelefonnetz wird in diesem Zusammenhang auch ein Mobiltelefonnetz verstanden, dass dem Grunde nach für einen landesweiten Betrieb ausgelegt ist, aber auch eine Netzabdeckung von weniger als 100% aufweisen kann.

Die eingangs genannte Aufgabe wird gelöst durch ein Verfahren zur Steuerung von Flughindernisbefeuerungen gemäß Anspruch 1.

Die dreidimensionale geografische Position des Luftfahrzeugs kann insbesondere die geografische Länge, die geografische Breite und die Flughöhe des Luftfahrzeugs umfassen. Auf diese Weise kann durch kooperative Auswertung von an verschiedenen Empfangseinrichtungen empfangenen Kennungsdatensätzen die aktuelle dreidimensionale geografische Position des Luftfahrzeugs zuverlässig bestimmt werden. Das erfindungsgemäße Verfahren ist damit insbesondere unabhängig vom Vorhandensein von die geografische Position des Luftfahrzeugs kennzeichnenden Daten in den Transpondersignalen der Luftfahrzeuge. Dies hat den Vorteil, dass das erfindungsgemäße Verfahren mit jeder Art von über Funk ausgesendeten Kennungsdatensätzen von Luftfahrzeugen kompatibel ist, unabhängig davon, ob diese Kennungsdatensätze eigene Informationen über die geografische Position des Luftfahrzeugs enthalten oder nicht. Das erfindungsgemäße Verfahren ist damit wesentlich weniger störungsanfällig als bekannte Lösungen.

Die Empfangseinrichtungen können insbesondere Empfangseinrichtungen zum Empfang von Flugzeug-Transpondersignalen sein. Die Empfangseinrichtungen können räumlich gleichmäßig oder ungleichmäßig über ein zu überwachendes Gebiet verteilt sein, z.B. derart, dass die Empfangseinrichtungen jeweils an Antennenmasten eines zellulären Mobiltelefonnetzes angeordnet sind, wie zuvor erläutert.

Ein in der Empfangseinrichtung gemessener physikalischer Kennwert kann z.B. ein mittels Zeitmessung bestimmter Empfangszeitpunkt und/oder eine mittels Leistungsmessung bestimmte Empfangsleistung sein. Die Empfangsleistung kann z.B. aus einem RSSI-Signal (RSSI - Received Signal Strength Information) gewonnen werden, das die Empfangseinrichtung bereitstellt. Es können dann z.B. in der Auswerteeinrichtung die von einem Luftfahrzeug stammenden Empfangszeitpunkte und/oder Empfangsleistungen derart zueinander in Beziehung gesetzt werden, dass Varianzen zwischen den empfangenen Funksignalen in Form von Zeitunterschieden der Empfangszeitpunkte und/oder Leistungsunterschiede der Empfangsleistungen bestimmt werden.

Die im Schritt b) in der jeweiligen Empfangseinrichtung einem empfangenen Kennungsdatensatz zugeordneten weiteren Informationen wie Empfangszeitpunkt, Empfangsleistung und/oder sonstiger gemessener physikalischer Kennwert können beispielsweise in Form eines Datenpakets der Auswerteeinrichtung zugeführt werden. Die Auswerteeinrichtung kann in Form einer zentralen Auswerteeinrichtung ausgebildet sein, die räumlich entfernt von sämtlichen Empfangseinrichtungen oder räumlich mit einer Empfangseinrichtung kombiniert sein kann. Die Auswerteeinrichtung kann auch aus mehreren separaten Computereinrichtungen gebildet sein, die an einem Ort oder an verschiedenen Orten aufgestellt sind und miteinander vernetzt sind. Beispielsweise können Teile der Auswerteeinrichtung kombiniert mit Empfangseinrichtungen angeordnet sein und andere Teile entfernt von solchen Empfangseinrichtungen angeordnet sein.

Gemäß einer vorteilhaften Ausgestaltung der Erfindung ist vorgesehen, dass die dreidimensionale geografische Position des Luftfahrzeugs durch Triangulation und/oder Trilateration aus den Varianzen bestimmt wird. Dies erlaubt eine zuverlässige rechnerische Bestimmung der dreidimensionalen geografischen Position des Luftfahrzeugs. Hierfür werden im Regelfall Datensätze aus wenigstens drei voneinander entfernten Empfangseinrichtungen benötigt. Stehen Datensätze von mehr als drei Empfangseinrichtungen zur Verfügung, können diese zur Erhöhung der Genauigkeit (Redundanz) der Bestimmung der dreidimensionalen geografischen Position des Luftfahrzeugs genutzt werden.

Gemäß der Erfindung ist vorgesehen, dass aus einer Vielzahl von für ein Luftfahrzeug nacheinander bestimmten dreidimensionalen geografischen Positionen die Flugrichtung und die Fluggeschwindigkeit des Luftfahrzeugs bestimmt wird. Auf diese Weise kann anhand der an den mehreren Empfangseinrichtungen empfangenen Kennungsdatensätzen eine weitergehende Information bestimmt werden, die eine Prognose der dreidimensionalen geografischen Position in die Zukunft ermöglicht. Dies hat wiederum den Vorteil, dass das Verfahren noch störungsanfälliger wird, weil kurze Datenlücken im Empfang rechnerisch anhand der Flugrichtung und der Fluggeschwindigkeit kompensiert werden können.

Gemäß der Erfindung ist vorgesehen, dass die Auswerteeinrichtung die dreidimensionale geografische Position des Luftfahrzeugs Systemen zur Steuerung von Flughindernisbefeuerungen bereitstellt und/oder Einschalt- und/oder Ausschaltsignale zum Einschalten oder Ausschalten von Flughindernisbefeuerungen aussendet. Somit kann die Auswerteeinrichtung entweder direkt an der Steuerung der Flughindernisbefeuerungen beteiligt sein, indem sie Einschalt- und/oder Ausschaltsignale bereitstellt. Stellt die Auswerteeinrichtung lediglich die dreidimensionale geografische Position anderen Systemen zur Steuerung von Flughindernisbefeuerungen bereit, so können diese durch Vergleich mit einer bekannten geografischen Position eines Luftfahrthindernisses selbsttätig die Steuerung der Flughindernisbefeuerung (Einschalten/Ausschalten) übernehmen.

Gemäß einer vorteilhaften Ausgestaltung der Erfindung ist vorgesehen, dass zumindest zu vorgegebenen Zeitpunkten ein Abgleich zwischen der von der Auswerteeinrichtung ermittelten dreidimensionalen geografischen Position des Luftfahrzeugs und von dem Luftfahrzeug über Funk selbst ausgesendeten Positionsdaten, die die dreidimensionale geografische Position des Luftfahrzeugs kennzeichnen, durchgeführt wird. Auf diese Weise kann eine Stützung der mit dem erfindungsgemäßen Verfahren berechneten Daten, d.h. aktuelle dreidimensionale geografische Position und ggf. daraus bestimmten Daten wie Flugrichtung und/oder Fluggeschwindigkeit, anhand der beispielsweise vom Transponder bereitgestellten Signale durchgeführt werden. Hierdurch kann die Sicherheit des erfindungsgemäßen Verfahrens sowie die Datenintegrität weiter verbessert werden.

Gemäß der Erfindung ist vorgesehen, dass bei Verlust des empfangenen Funksignals eines Luftfahrzeugs eine erste Mindesteinschaltzeit für die Flughindernisbefeuerung bestimmt wird, die anhand der zuvor bestimmten Flugrichtung und Fluggeschwindigkeit des Luftfahrzeugs berechnet wird. Dementsprechend kann bei einem solchen Signalverlust die Aufenthaltsdauer des Luftfahrzeugs im Bereich der Luftfahrthindernisse zumindest abgeschätzt werden und durch die erste Mindesteinschaltzeit sichergestellt werden, dass die Flughindernisbefeuerung nicht abgeschaltet wird, bevor das Luftfahrzeug den Bereich des Luftfahrthindernisses verlassen hat. Es wird somit erst dann ein Ausschalten der Flughindernisbefeuerung bewirkt, wenn die erste Mindesteinschaltzeit abgelaufen ist.

Gemäß einer vorteilhaften Ausgestaltung der Erfindung ist vorgesehen, dass zusätzlich eine von den Flugdaten des Luftfahrzeugs unabhängige zweite Mindesteinschaltzeit festgelegt für die Flughindernisbefeuerung ist, wobei die Flughindernisbefeuerung erst deaktiviert wird, wenn die erste und die zweite Mindesteinschaltzeit abgelaufen sind. Auf diese Weise wird eine von den berechneten Daten unabhängige Einschaltdauer der Flughindernisbefeuerung festgelegt, wodurch die Sicherheit gegenüber einem zu frühen Abschalten der Flughindernisbefeuerung weiter gesteigert wird.

Die eingangs genannte Aufgabe wird außerdem gelöst durch ein Computerprogramm mit Programmcodemitteln, eingerichtet zur Durchführung eines Verfahrens der zuvor erläuterten Art, wenn das Verfahren auf einem Rechner ausgeführt wird. Auch hierdurch können die zuvor erläuterten Vorteile realisiert werden. Der Rechner kann z.B. der Rechner der Auswerteeinrichtung sein oder einer oder mehrere Rechner von Computereinrichtungen, die die Auswerteeinrichtung bilden.

Die Erfindung wird nachfolgend anhand von Ausführungsbeispielen unter Verwendung von Zeichnungen näher erläutert.

Es zeigen
- Figur 1 - eine geografische Übersicht über eine Anlage und
- Figur 2 - eine schematische Darstellung einer Anlage.

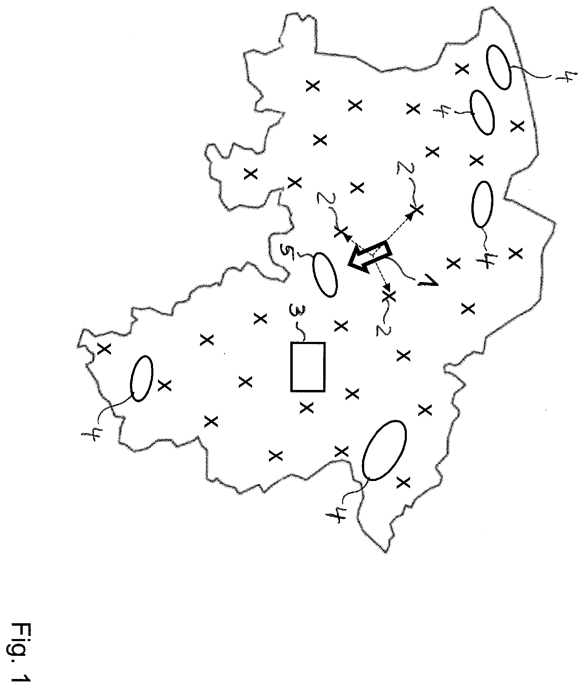

Die Figur 1 zeigt ein geografisches Gebiet, in dem eine Vielzahl von Empfangseinrichtungen angeordnet sind, die jeweils mit einem "X" gekennzeichnet sind. In dem Gebiet befinden sich außerdem verschiedene Luftfahrthindernisse, die beispielhaft in Form von Windparks 4, 5 dargestellt sind. Das Gebiet wird von einem Luftfahrzeug 1 überflogen. Das Luftfahrzeug 1 ist in Form eines Pfeils dargestellt, der zudem die Flugrichtung angibt. Wie man erkennt, fliegt das Luftfahrzeug 1 auf einen Windpark 5 zu.

Das Luftfahrzeug 1 weist einen Funksignalgeber auf, z.B. einen Flugzeug-Transponder, durch den über Funk Kennungsdatensätze des Luftfahrzeugs 1 ausgesandt werden. Beispielhaft ist in der Figur 1 dargestellt, dass die Kennungsdatensätze des Luftfahrzeugs 1 an drei in der Nähe befindlichen Empfangseinrichtungen 2 empfangen und erfindungsgemäß weiterverarbeitet werden, d.h. einem empfangenen Kennungsdatensatz werden in der jeweiligen Empfangseinrichtung 2 ein Empfangszeitpunkt und/oder eine Empfangsleistung zugeordnet. Die in den Empfangseinrichtungen 2 auf diese Weise bereitgestellten Datenpakete werden einer Auswerteeinrichtung 3 zugeführt, in der die Varianzen zwischen den empfangenen Funksignalen in Form von Zeitunterschieden der Empfangszeitpunkte und/oder Leistungsunterschieden der Empfangsleistungen bestimmt werden. Aus den Varianzen wird die aktuelle dreidimensionale geografische Position des Luftfahrzeugs 1 bestimmt. In der Auswerteeinrichtung 3 kann ferner die Flugrichtung und die Fluggeschwindigkeit des Luftfahrzeugs 1 bestimmt werden.

In einer Ausgestaltung der Erfindung können die Empfangseinrichtungen 2, X als Datenpaket folgende Informationen bereitstellen:
- Empfangszeitpunkt T
- Signalstärke P
- Das Luftfahrzeug 1 eindeutig kennzeichnende Informationen, z.B. eine Transponderidentifikationsnummer und/oder eine Transpondersignalnummer

Optional können die Empfangseinrichtungen 2, X im Datenpaket zusätzlich eine, mehrere oder alle der folgenden Informationen bereitstellen, die jeweils aus dem Kennungsdatensatz des Luftfahrzeugs 1 ausgelesen werden:
- Geschwindigkeit des Luftfahrzeugs 1
- Flughöhe des Luftfahrzeugs 1
- Flugrichtung des Luftfahrzeugs 1

Die Auswerteeinrichtung 3 kann dann unter Berücksichtigung der ihr bekannten geografischen Positionen der Windparks 4, 5 Einschalt- und/oder Ausschaltsignale zum Einschalten oder Ausschalten der Flughindernisbefeuerungen erzeugen und an die Luftfahrthindernisse übertragen. Beispielsweise würde im in der Figur 1 dargestellten Beispiel die Auswerteeinrichtung 3 Einschaltsignale für die Flughindernisbefeuerung des Windparks 5 erzeugen, sodass dort die Flughindernisbefeuerung eingeschaltet wird. Die Auswerteeinrichtung 3 kann außerdem Ausschaltsignale für die Flughindernisbefeuerung des Windparks 5 erzeugen, sodass dort die Flughindernisbefeuerung wieder ausgeschaltet wird.

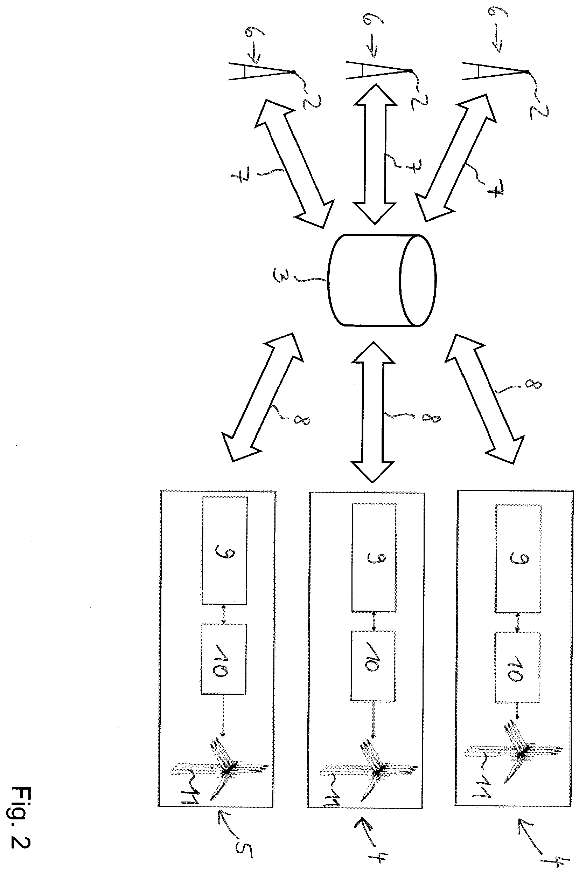

Die Figur 2 verdeutlicht insbesondere das Zusammenwirken der einzelnen Elemente der Anlage und die Datenflüsse. Die Empfangseinrichtungen 2, X sind jeweils an Antennenmasten 6 angeordnet, z.B. an einem Antennenmast eines zellulären Mobiltelefonnetzes. Über Datenverbindungen 7 werden die von den Empfangseinrichtungen 2, X bereitgestellten Datenpakete an die Auswerteeinrichtung 3 übertragen. Die Auswerteeinrichtung 3 führt die erläuterten Auswertungen durch und überträgt die Einschaltsignale und/oder Ausschaltsignale für die Flughindernisbefeuerungen über Datenverbindungen 8 an die Luftfahrthindernisse bzw. die Windparks 4, 5. Die Datenübertragung über die Datenverbindungen 7, 8 kann drahtgebunden oder drahtlos erfolgen.

Die über die Datenverbindungen 8 übertragenen Einschaltsignale und/oder Ausschaltsignale werden in den jeweiligen Windparks 4, 5 über Schnittstellengeräte 9 jeweiligen Ansteuergeräten 10 bereitgestellt. Die Ansteuergeräte 10 dienen zur Umsetzung der Einschaltsignale und der Ausschaltsignale in entsprechende Betätigungen der Hindernisbefeuerungen. Beispielsweise kann das Ansteuergerät 10 die elektrische Energieversorgung eines Signalgebergeräts der Flughindernisbefeuerung einschalten und ausschalten.

## Patentansprüche

1. Verfahren zur Steuerung von Flughindernisbefeuerungen mit folgenden Schritten:
a) an mehreren Empfangseinrichtungen (2), die an unterschiedlichen Orten installiert sind, werden über Funk ausgesendete Kennungsdatensätze von Luftfahrzeugen (1) empfangen, wobei ein Kennungsdatensatz zumindest eine das jeweilige den Kennungsdatensatz aussendende Luftfahrzeug (1) eindeutig kennzeichnende Information aufweist,
b) in der jeweiligen Empfangseinrichtung (2) wird einem empfangenen Kennungsdatensatz wenigstens ein in der Empfangseinrichtung (2) gemessener physikalischer Kennwert, insbesondere ein Empfangszeitpunkt und/oder eine Empfangsleistung, des empfangenen Kennungsdatensatzes zugeordnet,
c) in einer Auswerteeinrichtung (3) werden die von einem Luftfahrzeug (1) stammenden Kennwerte derart zueinander in Beziehung gesetzt, dass Varianzen zwischen den empfangenen Funksignalen in Form von Unterschieden zwischen den Kennwerten bestimmt werden,
d) aus den Varianzen wird die aktuelle dreidimensionale geografische Position des Luftfahrzeugs (1) bestimmt,
wobei aus einer Vielzahl von für ein Luftfahrzeug nacheinander bestimmten dreidimensionalen geografischen Positionen die Flugrichtung und die Fluggeschwindigkeit des Luftfahrzeugs bestimmt wird, die Auswerteeinrichtung (3) die dreidimensionale geografische Position des Luftfahrzeugs (1) Systemen (9, 10) zur Steuerung von Flughindernisbefeuerungen bereitstellt, sodass diese durch Vergleich mit einer bekannten geographischen Position eines Luftfahrthindernisses selbsttätig die Steuerung der Flughindernisbefeuerung übernehmen, und/oder Einschalt- und/oder Ausschaltsignale zum Einschalten oder Ausschalten von Flughindernisbefeuerungen aussendet, wobei bei Verlust des empfangenen Funksignals eines Luftfahrzeugs (1) eine erste Mindesteinschaltzeit für die Flughindernisbefeuerung bestimmt wird, die anhand der zuvor bestimmten Flugrichtung und Fluggeschwindigkeit des Luftfahrzeugs (1) berechnet wird.

2. Verfahren nach Anspruch 1, **dadurch gekennzeichnet, dass** die dreidimensionale geografische Position des Luftfahrzeugs (1) durch Triangulation und/oder Trilateration aus den Varianzen bestimmt wird.

3. Verfahren nach einem der Ansprüche 1 oder 2, **dadurch gekennzeichnet, dass** zumindest zu vorgegebenen Zeitpunkten ein Abgleich zwischen der von der Auswerteeinrichtung (3) ermittelten dreidimensionalen geografischen Position des Luftfahrzeugs (1) und von dem Luftfahrzeug (1) über Funk selbst ausgesendeten Positionsdaten, die die dreidimensionale geografische Position des Luftfahrzeugs (1) kennzeichnen, durchgeführt wird.

4. Verfahren nach einem der Ansprüche 1 bis 3, **dadurch gekennzeichnet, dass** zusätzlich eine von den Flugdaten des Luftfahrzeugs (1) unabhängige zweite Mindesteinschaltzeit festgelegt für die Flughindernisbefeuerung ist, wobei die Flughindernisbefeuerung erst deaktiviert wird, wenn die erste und die zweite Mindesteinschaltzeit abgelaufen sind.

5. Computerprogramm mit Programmcodemitteln, eingerichtet zur Durchführung eines Verfahrens nach einem der Ansprüche 1 bis 4, wenn das Computerprogramm auf einem Rechner ausgeführt wird.

## Claims

1. Method for controlling air obstacle lights comprising the following steps:
a) at a plurality of receiving devices (2) installed at different locations, identification data records of aircrafts (1) transmitted by radio are received, an identification data record having at least one item of information uniquely identifying the respective aircraft (1) transmitting the identification data record,
b) in the respective receiving device (2), at least one physical characteristic value measured in the receiving device (2), in particular a reception time and/or a reception power, of the received identification data set is assigned to a received identification data set,
c) in an evaluation device (3), the characteristic values originating from an aircraft (1) are related to each other in such a way that variances between the received radio signals are determined in the form of differences between the characteristic values,
d) the current three-dimensional geographical position of the aircraft (1) is determined from the variances,
wherein the flight direction and the flight speed of the aircraft is determined from a plurality of three-dimensional geographical positions successively determined for an aircraft, the evaluation device (3) provides the three-dimensional geographical position of the aircraft (1) to systems (9, 10) for controlling air obstacle lights, so that these systems automatically take over the control of the air obstacle lights by comparing the position with a known geographic position of a air obstacle, and/or transmits switch-on and/or switch-off signals for switching on or switching off air obstacle lights, wherein, in the event of loss of the received radio signal of an aircraft (1), a first minimum switch-on time for the air obstacle lights is determined, which is calculated on the basis of the previously determined flight direction and flight speed of the aircraft (1).

2. The method according to claim 1, **characterized in that** the three-dimensional geographical position of the aircraft (1) is determined by triangulation and/or trilateration from the variances.

3. Method according to one of claims 1 or 2, **characterized in that** a comparison is carried out at least at predetermined times between the three-dimensional geographical position of the aircraft (1) determined by the evaluation device (3) and position data transmitted by the aircraft (1) itself via radio, which position data characterize the three-dimensional geographical position of the aircraft (1).

4. Method according to one of the claims 1 to 3, **characterized in that**, in addition, a second minimum switch-on time independent of the flight data of the aircraft (1) is defined for the air obstacle lights, the air obstacle lights only being switched-off when the first and the second minimum switch-on time have expired.

5. A computer program comprising program code means arranged to perform a method according to any one of claims 1 to 4 when the computer program is executed on a computer.

## Revendications

1. Procédé de commande de balisages lumineux d'obstacles à la navigation aérienne, comprenant les étapes suivantes :
a) plusieurs dispositifs de réception (2), installés à différents endroits, reçoivent des ensembles de données d'identification émis par radio par des aéronefs (1), un ensemble de données d'identification comportant au moins une information identifiant de manière univoque l'aéronef (1) respectif qui émet l'ensemble de données d'identification,
b) dans le dispositif de réception (2) respectif, un ensemble de données d'identification reçu est associé à au moins une valeur caractéristique physique, mesurée dans le dispositif de réception (2), en particulier un instant de réception et/ou une puissance de réception de l'ensemble de données d'identification reçu,
c) dans un dispositif d'évaluation (3), les valeurs caractéristiques provenant d'un aéronef (1) sont mises en relation les unes avec les autres de telle sorte que les variances entre les signaux radio reçus sont déterminées sous forme de différences entre les valeurs caractéristiques,
d) la position géographique tridimensionnelle actuelle de l'aéronef (1) est déterminée à partir des variances,
dans lequel
la direction de vol et la vitesse de vol d'un aéronef sont déterminées à partir d'une pluralité de positions géographiques tridimensionnelles déterminées successivement pour l'aéronef,
le dispositif d'évaluation (3) fournit la position géographique tridimensionnelle de l'aéronef (1) à des systèmes (9, 10) de commande de balisages lumineux d'obstacles à la navigation aérienne, de sorte que ceux-ci, par comparaison avec une position géographique connue d'un obstacle à la navigation aérienne, prennent automatiquement en charge la commande des balisages lumineux d'obstacles à la navigation aérienne, et/ou émet des signaux d'activation et/ou de désactivation pour activer ou désactiver les balisages lumineux d'obstacles à la navigation aérienne, sachant qu'en cas de perte du signal radio reçu d'un aéronef (1), une première durée d'activation minimale du balisage lumineux d'obstacles à la navigation aérienne est déterminée, laquelle est calculée à partir de la direction de vol et de la vitesse de vol préalablement déterminées de l'aéronef (1).

2. Procédé selon la revendication 1,
**caractérisé en ce que** la position géographique tridimensionnelle de l'aéronef (1) est déterminée par triangulation et/ou trilatération à partir des variances.

3. Procédé selon l'une des revendications 1 ou 2,
**caractérisé en ce qu'**au moins à des instants prédéfinis, une comparaison est effectuée entre la position géographique tridimensionnelle de l'aéronef (1), déterminée par le dispositif d'évaluation (3), et les données de position émises par l'aéronef (1) lui-même par radio, qui caractérisent la position géographique tridimensionnelle de l'aéronef (1).

4. Procédé selon l'une des revendications 1 à 3,
**caractérisé en ce qu'**en supplément, une deuxième durée d'activation minimale, indépendante des données de vol de l'aéronef (1), est définie pour le balisage lumineux d'obstacles à la navigation aérienne, le balisage lumineux d'obstacles à la navigation aérienne n'étant désactivé qu'une fois que les première et deuxième durées d'activation minimales se sont écoulées.

5. Programme informatique avec des moyens de code de programme, conçu pour mettre en œuvre un procédé selon l'une des revendications 1 à 4, lorsque le programme informatique est exécuté sur un ordinateur.
